# EUROPÄISCHE PATENTSCHRIFT

(11) **EP 2 178 958 B1**
(45) Veröffentlichungstag und Bekanntmachung des Hinweises auf die Patenterteilung: **15.05.2013**
(21) Anmeldenummer: 08782816.6
(22) Anmeldetag: 14.08.2008
(51) Int. Cl.: C08B 1/00, C08K 3/04, C08K 3/10, C08K 3/28, C08K 3/30, D01F 1/10, D01F 2/10, D01F 2/00, C08K 3/38

(54) **MISCHUNG, INSBESONDERE SPINNLÖSUNG**
MIXTURE, ESPECIALLY SPINNING SOLUTION
MÉLANGE, EN PARTICULIER SOLUTION DE FILAGE

(30) Priorität: 16.08.2007 AT 12842007
(43) Veröffentlichungstag der Anmeldung: 28.04.2010
(73) Patentinhaber: Helfenberger Immobilien LLC & Co Textilforschungs- und Entwicklungs KEG, 4184 Helfenberg (AT)
(72) Erfinder: GLASER, Josef, A-4184 Helfenberg (AT)
(74) Vertreter: Hehenberger, Reinhard
(86) Internationale Anmeldenummer: PCT/AT2008/000288
(87) Internationale Veröffentlichungsnummer: WO 2009/021259

(56) Entgegenhaltungen:
- EP-A- 0 085 413
- EP-A- 1 542 240
- WO-A-93/23459
- WO-A-2005/007946
- DE-A1- 10 024 540
- DE-A1- 10 324 232
- FR-A- 2 452 511
- JP-A- 3 043 456
- US-A- 2 946 761
- US-A- 4 598 119
- US-A- 4 769 268
- US-B1- 6 232 371

## Beschreibung

Die Erfindung betrifft die Verwendung einer Mischung zum Herstellen von Fasern oder Formteilen.

Es ist bekannt, textile Flächengebilde aus Fasern, bei denen zumindest die Oberflächenschicht Aktivkohle aufweist, auf Grund der Adsorptionseigenschaft der Aktivkohle als Schutztextilien zu verwenden. Nachteilig bei der Herstellung solcher Fasern aus einer Spinnlösung ist, dass auf Grund der aus der hohen Reibung der Aktivkohleoberfläche resultierenden, ungenügenden Gleiteigenschaft der Spinnlösung nur sehr kurze Fasern hergestellt werden können. Dieser negative Umstand wird durch das Bilden von Agglomeraten der Aktivkohle, was zu einem "Reißen" der Faser führt, noch verstärkt. Nachteilig bei diesen Fasern mit Aktivkohle ist weiters, dass sie insbesondere auf Grund der hohen Reibung der Aktivkohleoberflächen auch sehr schlecht spinnbar sind, also kaum zu Fäden weiterverarbeitet werden können, aus denen dann mit herkömmlichen Methoden der textilen Verarbeitung Flächengebilde, wie z.B. gewebte Stoffe, Schutzbekleidung, elektrisch nicht leitfähige Erzeugnisse, und dergleichen, gebildet werden können.

Um aus einer gesponnenen Faser ein Garn aus mehreren Einzelfasern herstellen zu können, darf ein bestimmter Reibwert der Fasern untereinander nicht überschritten werden. Hierzu ist es bekannt, beim Herstellen solcher Fasern sogenannte Avivagen zu verwenden, welche die Gleitfähigkeit der Fasern verbessern, womit die Spinnbarkeit der Fasern erheblich verbessert wird. Avivagen sind organische Gleitmittel, wobei bei der Faserherstellung insbesondere höherwertige Seifen und Öle aus der Mineralölindustrie verwendet werden. Nachteilig bei diesen Avivagen ist, dass sie die Aktivkohle unter Herabsenken ihrer Adsorptionseigenschaft sättigen, wodurch die gewollten Eigenschaften der herzustellenden Faser negativ beeinflusst werden, da die Aktivkohle nur noch in eingeschränktem Umfang für die Adsorption von anderen Stoffen fähig ist.

Wird keine Avivage verwendet, so besteht der oben genannte Nachteil bezüglich der Spinnbarkeit, so dass in Folge hauptsächlich sehr kurze Fasern erzeugt werden können, die eben nicht zu einem Garn aus mehreren Einzelfasern versponnen werden können. Solche Kurzfasern sind beispielsweise Filze.

Bei der Spinnlösung besteht zudem das Problem, dass diese auf Grund der hohen Reibung der Aktivkohleoberfläche temperaturinstabil ist, was zu einem drastischen Anstieg der Temperatur der Lösung bzw. Mischung (onset-Temperatur) bis zur Selbstentzündung der Lösung bzw. Mischung führen kann.

Auch bei Formteilen, bei denen zumindest die Oberflächenschicht Aktivkohle aufweist, treten die genannten Nachteile auf, dass die zugrunde liegende Lösung bzw. Mischung temperaturinstabil ist und dass bei Einsatz von organischen Gleitmitteln die Adsorptionseigenschaft der Aktivkohle herabgesenkt wird.

Aus der WO 2005/007946 A1 ist eine thermostabile Form- oder Spinnmasse bekannt.

Aus der DE 103 24 232 A1 sind zellulosische Formkörper, wie Fasern, sowie Verfahren zu deren Herstellung bekannt.

Aus der DE 100 24 540 A1 ist eine Formmasse, die aus einer Spinnlösung enthaltend Cellulose besteht, bekannt.

Aus der WO 93/23459 A ist eine Graphit aufweisende Polymerlösung bekannt.

Der Erfindung liegt die Aufgabe zu Grunde, eine Verwendung einer Mischung zum Herstellen Von Fasern oder Formteilen zur Verfügung zu stellen, mit der die genannten Nachteile weitestgehend vermieden werden.

Die Aufgabe wird erfindungsgemäß mit Verwendungen gelöst, welche die Merkmale der Ansprüche 1 oder 2 aufweisen.

Bevorzugte und vorteilhafte Ausführungsformen des erfindungsgemäßen Verfahrens sind Gegenstand der Unteransprüche.

Erfindungsgemäß ist die Verwendung einer Mischung enthaltend eine Polymerlösung, insbesondere eine Celluloselösung, mit wenigstens zwei Additiven, wobei ein Additiv als anorganisches Gleit-und/oder Stabilisierungsmittel aus der Gruppe bestehend aus Graphit, Molybdänsulfid, Bornitrid und/oder Mischungen aus zwei oder mehreren dieser Bestandteile auswählbar ist, und wobei das zweite Additiv ein Adsorptionsmittel ist, zum Herstellen von Fasern oder Formteilen vorgesehen.

Dadurch, dass bei der Lösung zusätzlich zum Additiv ein anorganisches Gleit- und/oder Stabilisierungsmittel verwendet wird, wird erreicht, dass die Gleiteigenschaften von Fasern oder Formteilen verbessert werden, ohne dass die Eigenschaften des zweiten Additivs, insbesondere die Adsorptionseigenschaften, durch das Gleit- und/oder Stabilisierungsmittel negativ beeinflusst werden. Es hat sich überraschenderweise der Vorteil gezeigt, dass die Adsorptionseigenschaften des entsprechenden Additivs durch das Vorhandensein eines anorganischen Gleit- und/oder Stabilisierungsmittel sogar verbessert werden. Mit der Verbesserung der Gleiteigenschaften ohne Beeinträchtigung der Adsorptionseigenschaften ist es nun auch möglich, lange Fasern, wie z.B. auch endlose Fasern, bei denen zumindest die Oberflächenschicht Aktivkohle aufweist, herzustellen, zumal eine verminderte Agglomeratbildung der Aktivkohle die Gefahr, dass die Faser "reißt", stark verringert.

Ebenso wird durch den Einsatz eines anorganischen Gleit-und/oder Stabilisierungsmittels wie Graphit die Stabilität der Lösung erheblich verbessert. Insbesondere wird die Temperaturstabilität der Lösung bzw. der Mischung deutlich verbessert, welche in der Praxis ein wichtiges Qualitätsmerkmal darstellt.

Das anorganische Gleit- und/oder Stabilisierungsmittels wird aus der Gruppe bestehend aus Graphit, Molybdänsulfid oder Bornitrid ausgewählt, wobei diese Stoffe einzeln für sich verwendet aber auch beliebig miteinander kombiniert werden können. Graphit wirkt dabei sowohl als Gleit- als auch als Stabilisierungsmittel, Molybdänsulfid oder Bornitrid in erster Linie nur als Gleitmittel.

Vorteilhafterweise kann das zweite Additiv aus bereits für die Faserherstellung bekannten Adsorptionsmitteln, insbesondere aus der Gruppe bestehend aus Aktivkohle, Diamant, Gold, Silber, Keramik, wie z.B. piezoelektrische Keramik, Ruß oder Gesteinsmehlen ausgewählt werden.

Durch das erfindungsgemäße Verwenden eines anorganischen Gleit- und/oder Stabilisierungsmittels ist der Einsatz von herkömmlichen Avivagen, d.h. von organischen Gleitmitteln, zwar an sich nicht mehr notwendig, so dass diese ersatzlos z.B. bei der Faserherstellung weg gelassen werden können. Es hat sich jedoch gezeigt, dass das erfindungsgemäße Verwenden von anorganischen Gleitmitteln herkömmliche Avivagen in dem Sinne positiv beeinflusst, dass diese die Eigenschaften des zweiten Additivs, insbesondere die Adsorptionseigenschaften von Adsorptionsmitteln, dann weniger oder überhaupt nicht mehr negativ beeinflussen, da das Adsorptionsmittel, z.B. Aktivkohle, nicht mehr bzw. nicht mehr im herkömmlichen Ausmaß gesättigt wird.

Es zeigt sich, dass die erfindungsgemäße Verwendung der Mischung für eine Faser bzw. einen Formteil mit anorganischen Teilchen nicht derart verwendet wird, dass die Eigenschaften der Faser bzw. des Formteils lediglich in den inhärenten Eigenschaften der anorganischen Teilchen liegen. Die erfindungsgemäß erzielten, besonderen und über die inhärenten Eigenschaften einzelner Teile hinausgehenden Eigenschaften zeigen sich je erst bei Kombination von wenigstens zwei verschiedenen Kategorien von anorganischen Teilchen.

Im Rahmen der Erfindung können bekannte Verfahren zum Herstellen von Fasern angewandt werden, in dem das anorganische Gleit-und/oder Stabilisierungsmittel und das zweite Additiv entweder in eine Spinnlösung eingerührt und diese Faserlösung dann versponnen wird oder ein Hauptstrom aus im Wesentlichen reiner Polymerlösung und ein davon getrennter Teilstrom aus Polymerlösung und Additiven hergestellt wird und diese beiden vorerst getrennten Ströme dann gemeinsam versponnen werden.

Weiters kann die Mischung bei an sich bekannten Spinnverfahren und Verfahren zur Garnherstellung und Umspinnungsverfahren verwendet werden, wie z.B. bei DREF-Verfahren oder CORE-Verfahren. Mit der erfindungsgemäßen Mischung bzw. deren Verwendung ist es möglich, Garne mit gezielten Kern(Seele)/Mantelstrukturen zu erstellen. Hierbei wird der Kern/die Seele (z.B. Aramide oder aromatische Polyamide), der/die je nach gewünschter Eigenschaft gewählt werden kann, mit der Faser umsponnen. Somit können vorteilhafterweise die Eigenschaften von Kern/Seele und Faser, wie z.B. Adsorptionsfähigkeit, Zugfestigkeit und Hitzebeständigkeit, miteinander kombiniert werden. Auch kann die Mischung erfindungsgemäß im Meltblow-Verfahren, beispielsweise zum Herstellen von Faservliesen, und/oder Elektro-Spinning-Verfahren verwendet werden.

Am Beispiel eines Lyocellverfahrens (N-Methylmorpholine N-oxide, NMMNO) kann zur Herstellung einer Faser der spinnfähig gelösten Cellulose etwa bis 50% Aktivkohle und etwa bis 10% Graphitpulver beigemengt werden. Auch bekannte Nassspinnverfahren können bei der erfindungsgemäßen Verwendung angewandt werden, in dem beispielsweise dem Spinnbad neben Aktivkohle auch Graphitpulver beigemengt wird.

Die wenigstens zwei Additive werden vorzugsweise im Wesentlichen gleichmäßig über den Querschnitt des Faser verteilt wird.

Die Fasern bzw. Formteile können unter anderem in Form von textilen Flächengebilden, wie z.B. Gestricke, Vliese, Faservliese oder dergleichen, für deren beispielsweise Verwendung als Schutzbekleidung oder Sportbekleidung bzw. in Form von Folien weiterverarbeitet werden.

Weitere Einzelheiten, Merkmale und Vorteile der Erfindung ergeben sich aus der nachstehenden Beschreibung unter Bezugnahme auf die angeschlossenen Zeichnungen, in welcher eine bevorzugte Ausführungsform der Erfindung dargestellt ist.

Es zeigt: Fig. 1 eine Vorrichtung zum Herstellen einer Faser, Fig. 2 ein Messdiagramm der Mischung und Fig. 3 eine mögliche Partikelgrößenverteilung des in der Mischung verwendeten Graphits.

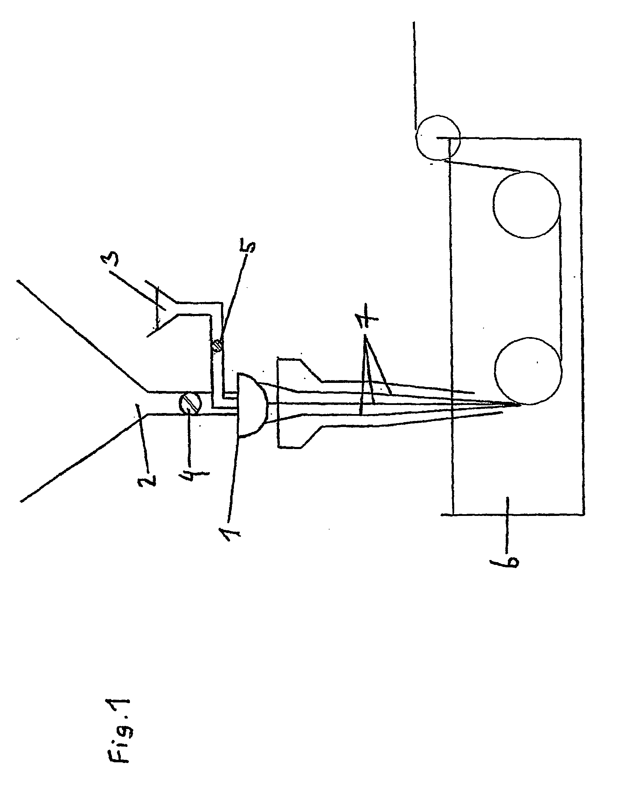

In der Fig. 1 ist eine Vorrichtung zum Herstellen einer Faser 7 dargestellt. In diesem Ausführungsbeispiel wird eine verspinnbare Mischung hergestellt, welche mittels einer Düse 1 versponnen wird. Die Mischung wird hergestellt, indem ein Hauptstrom 2 aus einer reinen Polymerlösung und ein davon getrennter Teilstrom 3 zusammengebracht werden. Der Teilstrom 3 ist eine Suspension enthaltend eine konzentrierte Polymerlösung, Aktivkohle als Adsorptionsmittel und Graphit als anorganisches Gleitmittel und Mittel zur Erhaltung der Stabilität der Spinnlösung. Gegebenenfalls kann der Teilstrom 3 zusätzlich auch eine organische Spinnavivage enthalten.

Im Rahmen der Erfindung können auch andere geeignete Adsorptionsmittel und Additive, wie z.B. herkömmliche organische Avivagen, und auch andere anorganische Gleit- und/oder Stabilisierungsmittels verwendet werden. Der Teilstrom kann durch Einwirkung von hochfrequentem Ultraschall behandelt werden.

Der Hauptstrom 2 wird über eine Pumpe 4 und der Teilstrom 3 wird über eine weitere Pumpe 5 zur Düse 1 befördert. Der Hauptstrom 2 und der Teilstrom 3 werden unmittelbar vor der Düse 1 zusammengebracht. Diese Spinnlösung wird anschließend zu Fasern 7 versponnen.

Die so hergestellten Fasern 7 können wie aus dem Stand der Technik bekannt einem Waschverfahren in einem Waschbad 6 unterzogen werden und vor der Weiterverarbeitung auf eine bestimmte Länge geschnitten oder zur Aufbewahrung auf einer Rolle aufgerollt werden. Mit den erfindungsgemäßen Fasern 7 lassen sich textile Flächengebilde, wie z.B. Schutzbekleidung, gewebte Stoffe, elektrisch nicht leitfähige Erzeugnisse, und dergleichen herstellen. Auch Formteile mit günstigen Adsorptions- und Gleiteigenschaften lassen sich herstellen.

Das Erzielen einer erhöhten Temperaturstabilität sowie der Umstand, dass das Aufnahmevermögen der Aktivkohle durch das Graphit nicht beeinträchtigt wird, soll am folgenden Beispiel einer Ausführungsform einer erfindungsgemäßen Mischung sowie deren erfindungsgemäßer Verwendung verdeutlicht werden.

In einem Spinnversuch wurde als erster Schritt zunächst ein Prinzipversuch zur Erspinnung einer Mustermenge mit Aktivkohle und Graphit modifizierten Lyocellfasern anberaumt. Der Füllgrad sollte 30 % Aktivkohle und 8 % Graphit bezogen auf Cellulose betragen und die Herstellung über Teilstrom 3-Dosierung einer Aktivkohle/Graphit-Suspension in NMMNO zur Cellulose-Spinnlösung erfolgen.

Die im Teilstrom 3 zu zudosierende Aktivkohle/Graphit-Suspension kann z.B. folgendermaßen zusammengesetzt sein:
1453 g NMMNO (80%-ig) - 1453 g Cellulose sind in 80 % NMMNO gelöst
607,3 g Picactif (TS: 97,82 %) - Aktivkohleart
158 g Graphit SLA 02
23,7 g Lewatit TP 207 (TS: 90,73 %) - schwachsaurer Kationenaustauscher
23,6 g Lewatit VP OC 1065 (TS: 90,91 %) - Anionenaustauscher
24,15 g NaOH (5 %-ig)

Lewatit wird als Komplexbindemittel, sogenannter Austauscher, verwendet, um Teilchen, wie z.B. Eisen oder andere Metallteilchen, anionische oder kationische Schadstoffe, zu binden. Im Rahmen der Erfindung können zusätzlich oder alternativ auch andere Additive als Austauscher verwendet werden, wobei solche Substanzen bevorzugt sind, die nicht oder nur wenig sauer sind, da saure Substanzen neutralisiert werden müssen. Im Rahmen der Erfindung können zusätzlich oder alternativ auch Laugen als Additiv verwendet werden, um zu verhindern, dass die Mischung in einen sauren Bereich gelangt.

Der Zusatz bestimmter Additive kann die thermische Stabilität von Spinnlösungen negativ beeinflussen. Insbesondere durch die Anwesenheit einiger Schwermetalle oder durch Zusatz von Additiven mit aktiven Oberflächen werden exotherme Vorgänge unter Abbau des Lösungsmittels NMMNO katalysiert, was in der Folge bis hin zu Explosionen führen kann.

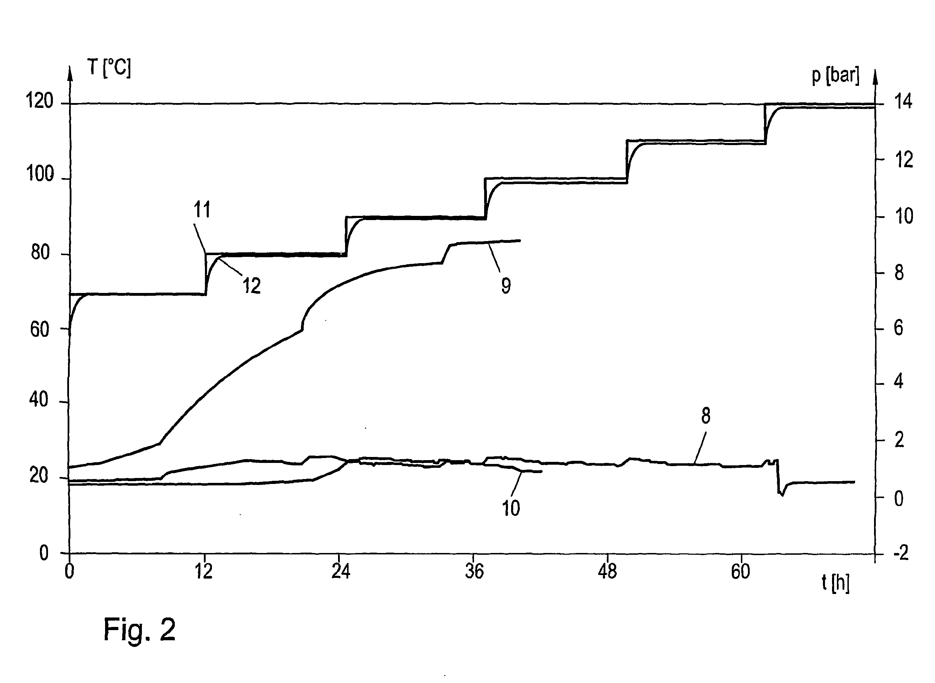

Beim Ansetzen der Suspension wurden in der Praxis keine thermischen Effekte beobachtet. Eine Probe dieser Suspension wurde in einem Langzeitversuch über 72 Stunden im Miniautoklaven auf ihre thermische Stabilität untersucht. Beginnend bei 70° C wurde die Probe für 12 Stunden isotherm gelagert, bevor alle 12 Stunden eine stufenweise Temperaturerhöhung um 10° C auf bis zu 120° C vollzogen wurde. Der gleichzeitig gemessene Druck im Autoklaven dient als Maß für die thermische Stabilität. Kommt es zu keinem Druckanstieg, kann von einer thermisch stabilen Suspension ausgegangen werden. Fig. 2, in welcher "p" den genauen Druck in "bar", "T" die gemessene Temperatur in "°C" und "t" die gemessene Zeit in Stunden "h" angibt, zeigt ein Messdiagramm einer stabilisierten Aktivkohle/Graphit-Suspension 8 im Vergleich zu einer stabilisierten 10 (mit NaOH) und einer nicht stabilisierten (ohne NaOH) Aktivkohlesuspension 9. Letztere zeigt einen deutlichen Druckanstieg bereits im Verlauf der ersten Stufe bei 70° C, während die beiden stabilisierten Suspensionen keine Anzeichen thermischer Instabilität zeigen. Der Soll-Temperaturverlauf der Probe ist mit 11 gekennzeichnet, der tatsächliche Temperaturverlauf der Probe mit 12.

In einer weiteren Messung am Miniautoklaven wurde die sogenannte Onset-Temperatur bestimmt, die Temperatur, die den Beginn eines thermischen Effektes definiert. Hierbei wird die Probe einem dynamischen Heizprogramm mit einer Aufheizrate von 1° C/min unterworfen. Die Onset-Temperatur der Aktivkohle/Graphit-Suspension wurde mit 109° C ermittelt, und damit höher als die Onset-Temperaturen der stabilisierten (105° C) und der nicht stabilisierten Vergleichsproben (100° C).

Die gelöste Cellulose erhöht bei zunehmender Temperatur den Eigendruck. Ideal ist ein Eigendruck von 0 bar. Dies erreicht man bei reiner Spinnlösung durch Zugabe von NaOH. Wie in Fig. 2 ersichtlich, steigt der Druck ohne NaOH theoretisch bis in einen gefährlichen Bereich (Explosionsgefahr). Bei Zugabe von NaOH und Graphit erreicht man einen Druck von 0 bar, also besser oder gleich als nur NaOH.

Die Ergebnisse der Stabilitätsuntersuchungen lassen den Schluss zu, dass die Ausspinnung der Aktivkohle/Graphit-modifizierten Lyocellfasern gefahrlos durchgeführt werden kann. Die Ergebnisse lassen auch die Schlussfolgerung zu, dass die Temperaturstabilität der Aktivkohle-Graphit-Suspension derart verbessert ist, dass eine über die Wirkungen der Komplexbindemittel und der NaOH hinausgehende Wirkung erzielt wurde.

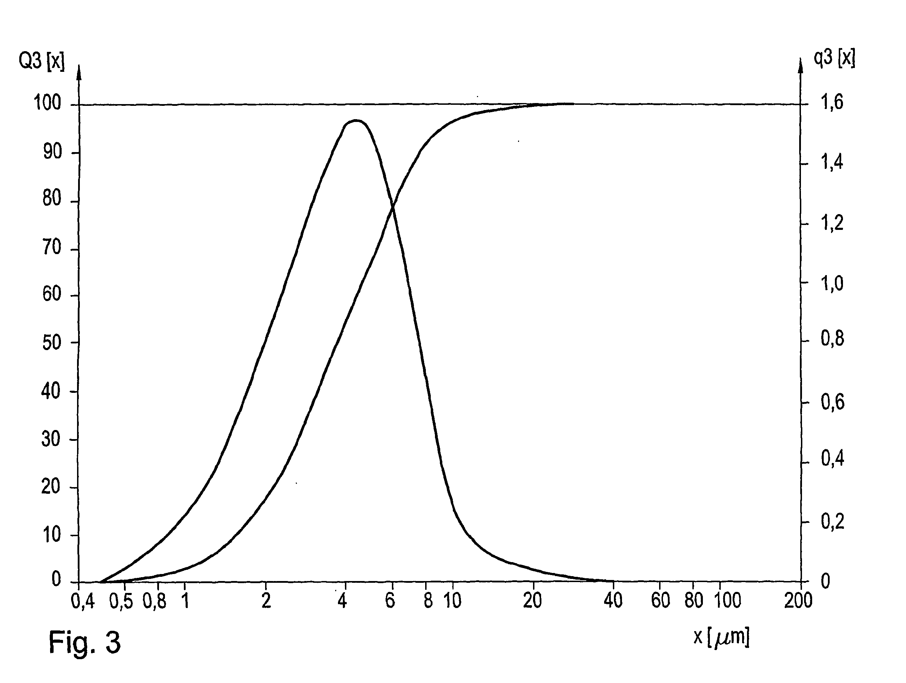

Der gemahlene Graphit, z.B. SLA 02, kann ein Oberkorn X₉₉ von 10 µm oder eine Partikelgrößenverteilung wie in Fig. 3 dargestellt aufweisen. In Fig. 3 ist "x" die Partikelgröße des Graphit in "µm", "q3(x)" die Dichteverteilung der Graphitpartikel und "Q3(x)" die Summenverteilung der Graphitpartikel bezogen auf deren Volumen.

Die Faser-Schnittlänge kann 40 mm betragen. Die Faserfeinheit kann beginnend bei 7 dtex sukzessive im Laufe der Ausspinnung soweit wie möglich erhöht werden.

Die Herstellung der Fasern erfolgte über Seitenstrom 3-Dosierung einer stabilisierten Aktivkohle/Graphit-Suspension in NMMNO gemäß oben erwähnter Zusammensetzung zu einer Cellulose-Spinnlösung. Die Zudosierung wurde so eingestellt, dass der Füllgrad der Fasern 30 % Aktivkohle und 8 % Graphit bezogen auf Cellulose betrug. Durch die Einmischung der reaktiven Aktivkohle/Graphit-Suspension erst unmittelbar vor der Spinndüse wird einem thermischen Abbau der Spinnlösung vorgebeugt.

Die Fasern wurden gründlich mit warmem Trinkwasser (etwa 50° C) ausgewaschen, um NMMNO quantitaviv zu entfernen.

| | |
|---|---|
| Erste Wäsche über Nacht | (15 Stunden) |
| Zweite Wäsche | (5 Stunden) |
| Dritte Wäsche | (3 Stunden) |
| Vierte Wäsche über Nacht | (15 Stunden) |
| Fünfte Wäsche | (3 Stunden) |
| Sechste Wäsche | (3 Stunden) |
| Siebente Wäsche | (3 Stunden) |
| Achte Wäsche über Nacht | (15 Stunden). |

Der gemessene Wert der Bestimmung des Restgehaltes an N-Methylmorpholin-N-Oxid mittels HPLC nach 8 Wäschen lag mit 3600 mg/kg immer noch sehr hoch. Bei vergleichbaren Untersuchungen an ausschließlich mit Aktivkohle modifizierten Fasern konnte der NMMNO-Gehalt mit 6 Wäschen auf unter 100 mg/kg gedrückt werden.

Die bei einer Probemenge von 50 Fasern ermittelten Faserparameter lassen sich angeben wie folgt:

| Prüfparameter | ME | |
|---|---|---|
| Feinheit | Dtex | 4,18 |
| Reißkraft | CN | 7,30 |
| Reißkraft V | % | 28,0 |
| Dehnung: trocken | % | 14,2 |
| Feinheitsbez. Tr. Reißkraft | cN/tex | 17,5 |
| Feinheitsbez. Schlg. Reißkraft | cN/tex | 3,63 |
| E-Modul (0,5 - 0,7 %) | cN/tex | 396 |

Bei der Bestimmung der Faserzusammensetzung mittels thermogravimetrischer Analyse wird eine Probe einem definierten Aufheizprogramm unterworfen. Der in Abhängigkeit von der Temperatur auftretende Massenverlust wird gemessen und charakterisiert die thermische Zersetzung des Materials. Eine Faserprobe wurde gemäß folgendem Programm untersucht: Aufheizen von 25,0 bis 700,0° C unter Stickstoff (Heizrate 20 K/min, 30 ml N₂/min) , weiteres Aufheizen von 700,0 bis 900,0° C unter Sauerstoff (Heizrate 20 K/min, 30 ml O₂/min).

Ein TGA-Plot zeigt eine dreistufige Zersetzung. Unter Stickstoffatmosphäre wird zunächst die enthaltene Feuchtigkeit freigesetzt, bevor sich die Cellulosematrix zersetzt. Beim anschließenden Umschalten auf Sauerstoff brennen die enthaltenen Graphit- und Aktivkohleanteile ab. Die nachfolgende Tabelle gibt die Anteile der jeweiligen Komponenten in Gewichts-% an.

| | Massenanteile |
|---|---|
| flüchtige Komponenten (Wasser) | 5,1 % |
| Cellulose | 60,5 % |
| Aktivkohle + Graphit | 34,6 %* |
| anorganische Bestandteile | - |

| | |
|---|---|
| *bezogen auf Trockensubstanz 36,5 % | |

Proben von jeweils ca. 1 g Fasern wurden genau ausgewogen und anschließend für 24 Stunden in mit Toluol bzw. CCl₄ gesättigter Atmosphäre gelagert. Anschließend wurden die Faserproben erneut ausgewogen und die Gewichstszunahme mit dem Aufnahmevermögen für die jeweilige Substanz gleichgesetzt.

| | |
|---|---|
| Toluol-Aufnahme: | 5,5 % |
| CCl₄-Aufnahme | 10,1 % |

Trotz eines Gehalts an Rest-NMMNO konnten sehr gute Aufnahmen an den beiden Modellsubstanzen erreicht werden. Diese bewegen sich im Rahmen von ausschließlich mit Aktivkohle modifizierten Fasern.

Zusammenfassend kann ein Ausführungsbeispiel der Erfindung wie folgt dargestellt werden:
Eine Mischung enthält eine Polymerlösung, insbesondere eine Celluloselösung, ein erstes Additiv in Form eines anorganischen Gleit- und/oder Stabilisierungsmittels, z.B. Graphit, und ein zweites Additiv als Adsorptionsmittel, z.B. Aktivkohle. Durch das anorganische Gleit- und/oder Stabilisierungsmittel werden die positiven Eigenschaften des Adsorptionsmittel nicht geschwächt sondern können sogar noch verbessert werden.

Die Mischung wird zum Herstellen von Fasern oder Formteilen verwendet.

## Patentansprüche

1. Verwendung einer Mischung enthaltend eine Polymerlösung, insbesondere eine Celluloselösung, mit wenigstens zwei Additiven, wobei ein Additiv als anorganisches Gleit- und/oder Stabilisierungs-mittel aus der Gruppe bestehend aus Graphit, Molybdänsulfid, Bornitrid und/oder Mischungen aus zwei oder mehreren dieser Bestandteile auswählbar ist, und wobei das zweite Additiv ein Adsorptionsmittel ist, zum Herstellen von Fasern (7).

2. Verwendung einer Mischung enthaltend eine Polymerlösung, insbesondere eine Celluloselösung, mit wenigstens zwei Additiven, wobei ein Additiv als anorganisches Gleit- und/oder Stabilisierungs-mittel aus der Gruppe bestehend aus Graphit, Molybdänsulfid, Bornitrid und/oder Mischungen aus zwei oder mehreren dieser Bestandteile auswählbar ist, und wobei das zweite Additiv ein Adsorptionsmittel ist, zum Herstellen von Formteilen.

3. Verwendung nach Anspruch 1, **dadurch gekennzeichnet, dass** die Fasern (7) durch Mischen des ersten und zweiten Additivs und gegebenenfalls weiterer Additive in die Polymerlösung und durch anschließendes Verspinnen der Mischung hergestellt werden.

4. Verwendung nach Anspruch 3, **dadurch gekennzeichnet, dass** ein Hauptstrom (2) aus im Wesentlichen reiner Polymerlösung und ein davon getrennter Teilstrom (3) aus erstem und zweitem Additiv und gegebenenfalls weiteren Additiven hergestellt wird und dass der Hauptstrom (2) und der Teilstrom (3) vor dem Verspinnen als Mischung zusammengebracht werden.

5. Verwendung nach Anspruch 3 oder 4, **dadurch gekennzeichnet, dass** die Mischung mittels einer Düse (1) versponnen wird und dass der Hauptstrom (2) und der Teilstrom (3) unmittelbar vor der Düse (1) zusammengebracht werden.

6. Verwendung nach einem der Ansprüche 1 oder 3 bis 5, **dadurch gekennzeichnet, dass** das erste und das zweite Additiv und gegebenenfalls weitere Additive im Wesentlichen gleichmäßig über den Querschnitt der Faser (7) verteilt werden.

7. Verwendung nach einem der Ansprüche 1 bis 6, **dadurch gekennzeichnet, dass** das zweite Additiv aus der Gruppe bestehend aus Aktivkohle, Diamant, Gold, Silber, Keramik, Ruß, Gesteinsmehlen und/oder Mischungen aus zwei oder mehreren dieser Bestandteile ausgewählt wird.

8. Verwendung nach einem der Ansprüche 1 bis 7, **dadurch gekennzeichnet, dass** ein organisches Avivagemittel als Additiv verwendet wird.

## Claims

1. Use of a mixture containing a polymer solution, in particular a cellulose solution, with at least two additives, wherein one additive as an inorganic lubricant and/or stabilising agent can be selected from the group consisting of graphite, molybdenum sulfide, boron nitride and/or mixtures of two or more of these constituents, and wherein the second additive is an adsorption agent, for the production of fibres (7).

2. Use of a mixture containing a polymer solution, in particular a cellulose solution, with at least two additives, wherein one additive as an inorganic lubricant and/or stabilising agent can be selected from the group consisting of graphite, molybdenum sulfide, boron nitride and/or mixtures of two or more of these constituents, and wherein the second additive is an adsorption agent, for the production of moulded parts.

3. The use according to Claim 1, **characterised in that** the fibres (7) are produced by mixing the first and second additive and optionally other additives into the polymer solution and by subsequent spinning of the mixture.

4. The use according to Claim 3, **characterised in that** a main stream (2) consisting of substantially pure polymer solution and a separate partial stream (3) consisting of first and second additive and optionally other additives are produced, and **in that** the main stream (2) and the partial stream (3) are brought together as a mixture before the spinning process.

5. The use according to Claim 3 or 4, **characterised in that** the mixture is spun by means of a nozzle (1), and **in that** the main stream (2) and the partial stream (3) are brought together directly before the nozzle (1).

6. The use according to one of Claims 1 or 3 to 5, **characterised in that** the first and the second additive and optionally other additives are distributed substantially uniformly over the cross-section of the fibre (7).

7. The use according to one of Claims 1 to 6, **characterised in that** the second additive is selected from the group consisting of activated carbon, diamond, gold, silver, ceramic, carbon black, stone dusts and/or mixtures of two or more of these constituents.

8. The use according to one of Claims 1 to 7, **characterised in that** an organic conditioner is used as an additive.

## Revendications

1. Utilisation d'un mélange contenant une solution de polymères, notamment une solution de cellulose, comportant au moins deux additifs, l'un des additifs pouvant à titre d'agent de démoulage et/ou de stabilisation inorganique être choisi dans le groupe constitué de graphite, de sulfure de molybdène, de nitrure de bore et /ou de mélanges réalisés à partir de deux ou de plusieurs desdits constituants, et le deuxième additif étant un adsorbant, pour fabriquer des fibres (7).

2. Utilisation d'un mélange contenant une solution de polymères, notamment une solution de cellulose, comportant au moins deux additifs, l'un des additifs pouvant à titre d'agent de démoulage et/ou de stabilisation inorganique être choisi dans le groupe constitué de graphite, de sulfure de molybdène, de nitrure de bore et /ou de mélanges réalisés à partir de deux ou de plusieurs desdits constituants, et le deuxième additif étant un adsorbant, pour fabriquer des pièces moulées.

3. Utilisation selon la revendication 1, **caractérisée en ce que** les fibres (7) sont fabriquées en mélangeant le premier et le deuxième additif et le cas échéant d'autres additifs à la solution de polymères puis en mettant en oeuvre un processus de filage à partir dudit mélange.

4. Utilisation selon la revendication 3, **caractérisée en ce que** l'on met en oeuvre un flux principal (2) constituée essentiellement de la solution de polymères pure et un flux partiel (3) qui est séparé de ce dernier et qui est réalisé à partir des premier et deuxième additifs et le cas échéant d'autres additifs, et que le flux principal (2) et le flux partiel (3) sont réunis en amont du processus de filage pour former un mélange.

5. Utilisation selon les revendications 3 ou 4, **caractérisée en ce que** le mélange est soumis au processus de filage au moyen d'une filière (1) et que le flux principal (2) et le flux partiel (3) sont réunis immédiatement en amont de la filière (1).

6. Utilisation selon l'une des revendications 1 ou 3 à 5, **caractérisée en ce que** le premier et le deuxième additifs et le cas échéant d'autres additifs sont mis en oeuvre de manière à ce qu'ils présentent une répartition sensiblement régulière à travers le profil de la fibre (7).

7. Utilisation selon l'une des revendications 1 à 6, **caractérisée en ce que** le deuxième additif est choisi dans le groupe constitué de charbon actif, de diamant, d'or, d'argent, de matériaux céramiques, de noir de carbone, de poudres minérales et/ou de mélanges réalisés à partir de deux ou de plusieurs desdits constituants.

8. Utilisation selon l'une des revendications 1 à 7, **caractérisée en ce que** l'on utilise un agent d'avivage organique en tant qu'additif.
